# EUROPÄISCHE PATENTSCHRIFT

(11) **EP 0 978 438 B1**
(45) Veröffentlichungstag und Bekanntmachung des Hinweises auf die Patenterteilung: **17.03.2004**
(21) Anmeldenummer: 98114686.3
(22) Anmeldetag: 05.08.1998
(51) Int. Cl.: B62B 3/06

(54) **Gabelhubwagen**
Fork lift truck
Chariot élévateur à fourche

(43) Veröffentlichungstag der Anmeldung: 09.02.2000
(73) Patentinhaber: Crown Gabelstapler GmbH, D-81677 München (DE)
(72) Erfinder: Galek, Leszek, Dipl.-Ing., 85560 Ebersberg (DE)
(74) Vertreter: Sandmann, Joachim, Dr.

(56) Entgegenhaltungen:
- US-A- 2 615 677

## Beschreibung

Die Erfindung bezieht sich auf einen Gabelhubwagen mit einem Antriebsteil und einem anhebbaren Lastteil, die durch wenigstens ein Lenkerpaar aus einem oberen Lenker und einem unteren Lenker von unterschiedlichen Längen miteinander verbunden sind, so dass der Lastteil beim Anheben/Absenken eine Neigungsveränderung erfährt.

Ein derartiger Gabelhubwagen ist aus US-A-2,615,677 bekannt. Dabei ist der obere Lenker kürzer als der untere Lenker ausgeführt. Die unterschiedlich langen Lenker sind vorgesehen, um beim Absenken der Gabelplattform und beim Auftreffen des hinteren mit Rollen versehenen Endes der Gabelplattform auf den Bodensteg einer Palette eine Aufwärtsverlagerung bzw. ein Einziehen der Lasträder zu erzielen, damit diese beim Herausziehen der Gabelplattform aus der Palette nicht auf weitere bodenseitige Palettenstege treffen, die von den ausgefahrenen Lasträdem wegen ihres kleinen Durchmessers nicht oder nur sehr schwer überfahren werden können. Beim Anheben/Absenken des Lastteils öffnet bzw. schließt sich ein zwischen diesen Teilen vorhandener Spalt. Hieraus resultiert die Gefahr, dass die Finger einer mit dem Gabelhubwagen arbeitenden Person gequetscht oder gar abgeschert werden, wenn sie aus Unachtsamkeit in das obere Ende des Spalts gelangen, beispielsweise weil sich die Person mit einer Hand auf dem Antriebsteil stützt. Diese Gefahr besteht auch und sogar insbesondere dann, wenn der Spalt in der unteren und/oder oberen Stellung des Lastteils wie üblich so eng ist, dass die Finger nicht in den Spalt hinein greifen können.

Um einer solchen Verletzungsgefahr zu begegnen ist es aus DE-A-42 09 860 bekannt, bei einem Gabelhubwagen mit einem Antriebsteil und einem abhebbaren Lastteil, die durch ein Lenkerpaar aus einem oberen Lenker und einem unteren Lenker von gleicher Länge miteinander verbunden sind, eine dem Öffnen des Spalts zwischen dem Antriebsteil und dem Lastteil entgegenwirkende Sicherheitseinrichtung vorzusehen. Die gleich langen Lenker bilden mit dem Antriebsteil und dem Lastteil ein Gelenkparalellogramm, das zu einer Parallelverschiebung des Lastteils bei seinem Anheben führt, wobei der Spaltabstand am größten ist, wenn die Lenker ihre waagerechte Stellung durchlaufen. Die Sicherheitseinrichtung ist dadurch gebildet, dass die der Rückwand des Antriebsteils benachbart gegenüberliegende Frontwand des Lastteils in ihrem oberen Bereich, der beim Anheben die obere Kante der Rückwand des Antriebsteils passiert, sich konvex vorwölbt, so dass in der Mitte des Anhebens und Absenkens des Lastteils bei waagerecht orientierten Lenkern der sich am weitesten vorwölbende Punkt der Frontwand des Lastteils der Oberkante der Rückwand des Antriebsteil gegenüber liegt. Auf diese Weise wird erreicht, dass beim Heben und Senken des Lastteils der Spalt an seinem oberen Ende sich weder öffnet noch schließt und dabei so eng bleibt, dass Fingerverletzungen ausgeschlossen sind.

Bei dieser bekannten Lösung ist es jedoch von Nachteil, dass die Frontwand des Lastteils zur Ausbildung der Vorwölbung entsprechend verformt werden muß und dass auch die Rückwand des Antriebsteils mit einer Einziehung versehen werden muß, die bei abgesenktem Lastteil die Vorwölbung der Frontwand des Lastteils aufnimmt.

Andere bekanntgewordene Lösungen des Problems sehen vor, den Spalt an seinem oberen Ende durch ein vorgespanntes bewegliches Zusatzteil zu verschließen oder aber im oberen Spaltbereich an der Rückwand des Antriebsteils oder der Frontwand des Lastteils ein elastisches Zusatzteil einzubauen, das unter einer Quetschkraft nachgibt bevor es zu einer Fingerverletzung kommt. In diesen Fällen müssen zusätzliche Bauteile angebracht werden, was ebenfalls ein unerwünschter Aufwand ist.

Dementsprechend liegt der Erfindung die Aufgabe zugrunde, die Gefahr von Fingerverletzungen auf einfache Weise ohne wesentlichen Zusatzaufwand auszuschließen:

Diese Aufgabe wird ausgehend vom eingangs beschriebenen Gabelhubwagen erfindungsgemäß dadurch gelöst, dass die beiden Lenker eine dem Öffnen des zwischen dem Antriebsteil und dem Lastteil gebildeten Spalts entgegenwirkende Sicherheitseinrichtung bilden, wobei der obere Lenker länger als der untere Lenker ist und der Längenunterschied zwischen den beiden Lenkern so bemessen ist, dass sich das obere Ende des Spalts bei der Hubverschwenkung nicht in sicherheitsrelevantem Maße öffnet.

Bei dieser Lösung können die Rückwand des Antriebsteils und die Frontwand des Lastteils, zwischen denen der Spalt gebildet ist, glatt ausgeführt sein. Es bedarf auch keiner Zusatzteile. Lediglich differieren die beiden Lenker hinsichtlich ihrer wirksamen Länge, was keinen ins Gewicht fallenden Aufwand darstellt. Durch die unterschiedlich langen Lenker erfährt der Lastteil beim Heben und Senken anstatt einer Parallelverschiebung eine geringfügige Neigung bzw. Neigungsänderung. Durch die Wahl geeigneter Längen bzw. des Längenunterschieds der beiden Lenker in Abhängigkeit von dem Abstand zwischen den beiden Gelenkpunkten am Antriebsteil und dem Abstand des unteren Anlenkpunkts von der Oberkante der Rückwand des Antriebsteils läßt sich erreichen, daß die Neigungsveränderung des Lastteils beim Anheben/Absenken im Bereich der kritischen Oberkante der Rückwand des Antriebsteils die ansonsten auftretende Veränderung der Spaltweite kompensiert, so daß an dieser kritischen Stelle die Spaltweite konstant und unterhalb des kritischen Wertes (8 mm) bleibt.

Zweckmäßige Ausgestaltungen und Weiterbildungen der Erfindung ergeben sich aus den Unteransprüchen. Danach ist der obere Lenker länger als der untere Lenker. Auch ist es zweckmäßig, wenn die beiden Lenker sich bei abgesenktem Lastteil abwärts geneigt und bei angehobenem Lastteil aufwärts geneigt vom Antriebsteil zum Lastteil erstrecken. Dabei kommt es nur zu insgesamt kleinen Neigungsänderungen des Lastteils.

Ein Ausführungsbeispiel der Erfindung wird nachfolgend anhand einer schematischen Zeichnung näher erläutert. Es zeigen:
- Figur 1: eine Seitenansicht des Gabelhubwagens mit abgesenktem Lastteil und hochgestellter teilweise weggebrochener Deichsel;
- Figur 2: eine Figur 1 entsprechende Darstellung mit teilweise angehobenem Lastteil; und
- Figur 3: eine Figuren 1 und 2 entsprechende Darstellung mit vollständig angehobenem Lastteil.

Der Gabelhubwagen 1, der zum Anheben, Verfahren und Absetzen von auf Paletten befindlichen Lasten vorgesehen ist, weist einen vorderen Antriebsteil 2 und einen hinteren Lastteil 3 auf. Diese beiden Teile sind in bekannter Weise ausgebildet und bedürfen keiner detaillierten Beschreibung. Vom Antriebsteil 2 sind das batteriegetriebene Antriebsrad 4 und die angedeutete Deichsel 5 dargestellt, die dem Lenken des Gabelhubwagens dient und griffseitig mit den Schaltern zur Steuerung des Fahrantriebs und des Hubantriebs für den Lastteil 3 versehen ist.

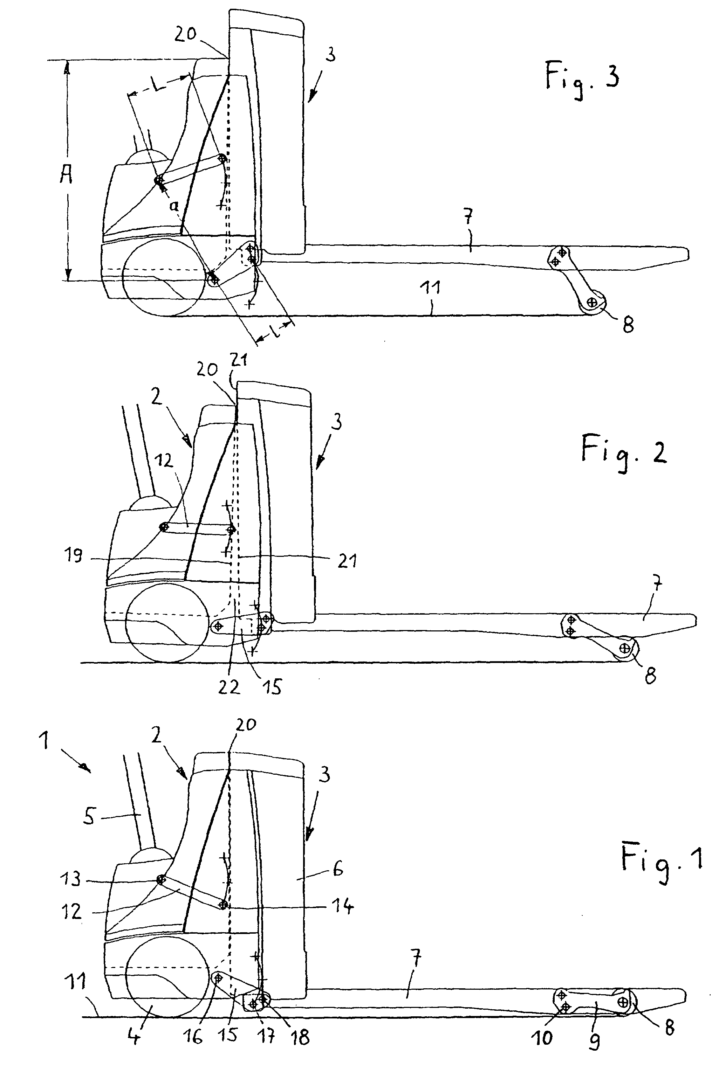

Der Lastteil 3 weist ein Gehäuse 6 zur Aufnahme der Batterien auf, die dem Lastteil 3 das nötige Gewicht verleihen, damit ein Absenken des Lastteils auch ohne Beladung nur durch Aufsteuern eines Rückströmventils erreicht wird, so daß der hydraulische Hubantrieb nur einseitig im Sinne des Anhebens des Lastteils wirksam ist. Des weiteren weist der Lastteil 3 zwei im seitlichen Abstand nach hinten ragende Gabelarme 7 auf, von denen in der Zeichnung nur einer zu ersehen ist. Jedem Gabelarm 7 ist ein Stützrad 8 zugeordnet, das am einen Ende eines Schwenkhebels 9 gelagert ist, dessen anderes Ende am Gabelarm 7 gelagert ist und ein radial versetztes Gelenk 10 aufweist, an das eine durch den Gabelarm 7 geführte Schwenkstrebe (nicht dargestellt) angeschlossen ist, um das sich auf dem Boden 11 abstützende Stützrad 8 gegenüber dem Gabelarm 7 nach unten auszufahren, wodurch der Lastteil 3 angehoben wird, wie es die Figuren 2 und 3 veranschaulichen.

Der Antriebsteil 2 und der Lastteil 3 sind durch einen oberen Lenker 12 mit einem antriebsseitigen Anlenkpunkt 13 und einem lastseitigen Anlenkpunkt 14 sowie durch einen unteren Lenker 15 mit einem antriebsseitigen Anlenkpunkt 16 und einem lastseitigen Anlenkpunkt 17 miteinander verbunden. Der untere Lenker 15 weist eine geringere Länge als der obere Lenker 12 auf und ist an seinem lastseitigen Ende mit einem zum Anlenkpunkt 17 radial versetzten Gelenk 18 versehen, an das die vorgenannte Schwenkstrebe angeschlossen ist, die sich durch den Gabelarm 7 erstreckt.

In allen drei Figuren sind die Kreisbögen eingezeichnet, die beim Anheben und Absenken des Lastteils 3 von den lastseitigen Anlenkpunkten 14 und 17 durchlaufen werden, wobei jeweils ein unteres Kreuz die Stellung bei abgesenktem Lastteil 3 gemäß Figur 1, ein mittleres Kreuz die Stellung bei teilweise angehobenem Lastteil 3 gemäß Figur 2 und ein oberes Kreuz die Stellung bei vollständig angehobenem Lastteil 3 gemäß Figur 3 veranschaulichen.

Für das Verständnis der Erfindung und des erzielten Vorteils ist darauf hinzuweisen, daß der Antriebsteil 2 mit einer senkrecht verlaufenden Rückwand 19 versehen ist, die an ihrem oberen Ende durch eine Oberkante 20 begrenzt ist. Dieser Rückwand 19 liegt eng benachbart eine Frontwand 21 des Lastteils 3 gegenüber, die eine Wand des Gehäuses 6 bildet. Zwischen der Rückwand 19 und der Frontwand 21 ist ein schmaler Spalt 22 gebildet, der in Figur 1 kaum in Erscheinung tritt, weil dort die Wände 19 und 21 senkrecht ausgerichtet sind und über die ganze Höhe mit einem geringen Spaltabstand von nur wenigen mm verlaufen. Bei im wesentlichen waagerecht verlaufenden Lenkern 12 und 15 gemäß Figur 2 öffnet sich dagegen der Spalt 22, wobei aber die unterschiedlichen Längen der beiden Lenker 12 und 15 bewirken, daß der Lastteil 3 bzw. seine Frontwand 21 eine leichte Neigung erfährt, so daß sich der Spalt 22 nur nach unten hin öffnet. Das hat zur Folge, daß im Bereich der Oberkante 20 die geringe Spaltweite, wie sie in Figur 1 vorhanden ist, im wesentlichen unverändert erhalten bleibt. Das gilt wie dargestellt auch für die Stellung mit vollständig angehobenem Lastteil 3 gemäß Figur 3, in der sich der Spalt 22 bereits wieder weitgehend geschlossen hat.

Der in allen Stellungen des Lastteils 3 im Bereich der Oberkante 20 vorhandene, nur wenige mm breite Spalt schließt die ansonsten für die Finger einer mit dem Gabelhubwagen arbeitenden Person bestehende Verletzungsgefahr beim Anheben oder Absenken des Lastteils 3 aus, weil im kritischen Bereich der Oberkante 20 der Spalt 22 in allen Betriebsstellungen so eng ist, daß ein Hineingreifen aus Unachtsamkeit unmöglich ist.

Zur Erzielung dieser Verhältnisse wird ein Unterschied zwischen der Länge L des oberen Lenkers 12 und der Länge l des unteren Lenkers 15 eingehalten, der abhängig ist vom Abstand a zwischen den antriebsseitigen Anlenkpunkten 13 und 16 und dem Abstand A zwischen dem unteren antriebsseitigen Anlenkpunkt 16 und der Oberkante 20 der Rückwand 19, wie es in Figur 3 eingezeichnet ist. Im übrigen läßt sich ein geeigneter Längenunterschied zwischen den beiden Lenkern 12 und 15 empirisch bzw. auf zeichnerischem Wege gewinnen.

## Patentansprüche

1. Gabelhubwagen mit einem Antriebsteil (2) und einem anhebbaren Lastteil (3), die durch wenigstens ein Lenkerpaar (12, 15) aus einem oberen Lenker (12) und einem unteren Lenker (15) von unterschiedlichen Längen (L, 1) miteinander verbunden sind, so dass der Lastteil (3) beim Anheben/Absenken eine Neigungsveränderung erfährt, **dadurch gekennzeichnet, dass** die beiden Lenker (12, 15) eine dem Öffnen des zwischen dem Antriebsteil (2) und dem Lastteil (3) gebildeten Spalts (3 entgegenwirkende Sicherheitseinrichtung bilden, wobei der obere Lenker (12) länger als der untere Lenker (15) ist und der Längenunterschied (L-I) zwischen den beiden Lenkern (12, 15) so bemessen ist, dass sich das obere Ende des Spalts (22) bei der Hubverschwenkung nicht in sicherheitsrelevantem Maße öffnet.

2. Gabelhubwagen nach Anspruch 1, **dadurch gekennzeichnet, dass** die beiden Lenker (12, 15) sich bei abgesenktem Lastteil (3) abwärts geneigt und bei angehobenem Lastteil (3) aufwärts geneigt vom Antriebsteil (2) zum Lastteil (3) erstrecken.

## Claims

1. Fork-lift truck having a drive part (2) and a raisable load part (3), which are connected to one another by at least one pair of links (12, 15), comprising a top link (12) and a bottom link (15) of different lengths (L, 1), with the result that the load part (3) undergoes a change in inclination during raising/lowering, **characterized in that** the two links (12, 15) form a safety arrangement which counteracts opening of the gap (22) formed between the drive part (2) and the load part (3), the top link (12) being longer than the bottom link (15), and the difference in length (L-1) between the two links (12, 15) being dimensioned such that the top end of the gap (22) does not open to an extent which compromises safety during the lifting pivoting operation.

2. Fork-lift truck according to Claim 1, **characterized in that** the two links (12, 15) extend from the drive part (2) to the load part (3) in a downwardly inclined manner when the load part (3) has been lowered and in an upwardly inclined manner when the load part (3) has been raised.

## Revendications

1. Chariot élévateur à fourche comprenant une partie d'entraînement (2) et une partie de charge soulevable (3), qui sont reliées l'une à l'autre par au moins une paire de bras oscillants (12, 15) constituée d'un bras oscillant supérieur (12) et d'un bras oscillant inférieur (15) de longueurs différentes (L, 1), de sorte que la partie de charge (3) lors du soulèvement/abaissement subit une variation d'inclinaison, **caractérisé en ce que** les deux bras oscillants (12, 15) forment un dispositif de sécurité agissant à l'encontre de l'ouverture de la fente (22) formée entre la partie d'entraînement (2) et la partie de charge (3), le bras oscillant supérieur (12) étant plus long que le bras oscillant inférieur (15) et la différence de longueur (L-1) entre les deux bras oscillants (12, 15) étant dimensionnée de telle sorte que l'extrémité supérieure de la fente (22) ne s'ouvre pas dans une mesure affectant la sécurité lors du pivotement de levage.

2. Chariot élévateur à fourche selon la revendication 1, **caractérisé en ce que** les deux bras oscillants (12, 15) s'étendent de façon inclinée vers le bas lorsque la partie de charge (3) est abaissée et de façon inclinée vers le haut de la partie d'entraînement (2) vers la partie de charge (3), lorque la partie de charge (3) est soulevée.
